# EUROPÄISCHE PATENTSCHRIFT

(11) **EP 1 619 055 B1**
(45) Veröffentlichungstag und Bekanntmachung des Hinweises auf die Patenterteilung: **11.01.2012**
(21) Anmeldenummer: 04105741.5
(22) Anmeldetag: 12.11.2004
(51) Int. Cl.: B60G 7/00, B60G 3/06

(54) **Einschaliger vorderer Querlenker**
Single-shell front lateral arm
Bras latéral avant monocoque

(30) Priorität: 21.07.2004 EP 04103472
(43) Veröffentlichungstag der Anmeldung: 25.01.2006
(73) Patentinhaber: Ford Global Technologies, LLC, A subsidary of Ford Motor Company, Dearborn, MI 48126 (US)
(72) Erfinder: Hallfeldt, Torsten, 52249, Eschweiler (DE); Simon, Marc, 50735, Köln (DE); Kunkel, Michael, 50354, Huerth-Efferen (DE); Loeffelsender, Mark, 52859, Niederkassel (DE)
(74) Vertreter: Drömer, Hans-Carsten

(56) Entgegenhaltungen:
- EP-A- 0 733 499
- EP-A- 0 760 300
- EP-A- 1 223 058
- EP-A- 1 346 855

## Beschreibung

Die Erfindung betrifft einen L-förmigen Querlenker, vorzugsweise in Einschalenausbildung, der einen Anbindungsschenkel und einen Radschenkel aufweist, wobei der Anbindungsschenkel einen in Längsrichtung eines Kraftfahrzeuges gesehen vorderen Anbindungspunkt und einen dazu beabstandeten hinteren Anbindungspunkt aufweist, die jeweils mit einer Kraftfahrzeugkarosserie bzw. einem Hilfsrahmen verbindbar sind, wobei der Anbindungsschenkel im Wesentlichen längs der Längsrichtung orientiert ist, und wobei sich der Radschenkel von dem vorderen Anbindungspunkt zu einem freien Ende erstreckt, an dem ein Rad anbindbar ist, und wobei der Radschenkel im Wesentlichen quer zur Längsrichtung orientiert ist, und wobei der Querlenker im Querschnitt gesehen U-förmig mit einem Basissteg und zwei U-Schenkeln ausgestaltet ist und in Einbaulage einseitig geöffnet ist.

Derartige Querlenker sind bekannt.

Die gattungsgemäße EP 1 346 855 A2 offenbart einen Querlenker als Fahrwerkskomponente der Radaufhängung eines Kraftfahrzeuges, welcher einen L-förmig konfigurierten Schalenkörper aus Metallblech mit zwei Längsabschnitten und einen zwischen den Längsabschnitten befindlichen Bogenabschnitt umfaßt. Der Schalenkörper weist einen Boden mit randseitigen Schenkeln auf. An die Schenkel schließen sich nach innen zur Mittellängsebene des Schalenkörpers gerichtete Stege einstückig an. Die EP 1 346 855 A2 betrifft aber auch ein Verfahren zur Herstellung des Schalenkörpers für einen Querlenker, bei dem zunächst eine Metallplatine zu einem schalenförmigen Vorformling mit einem Boden und randseitigen Schenkeln umgeformt wird. Unter bereichsweiser innerer Abstützung des Bodens wird der Vorformling durch einen Innenstempel über einen Außenstempel in einer Hohlform unter einwärts gerichteter Umstellung der freien Enden der Schenkel zum Schalenkörper endgeformt.

Die EP 0 733 499 B1 bezieht sich auf einen Schwingarm, der durch Preßformen oder durch Bördeln eines plattenförmigen Elementes ausgebildet ist, wobei in einem Fall, in dem, während ein Fahrzeug fährt, eine Last auf den Schwingarm in eine Richtung aufgebracht wird, die eine Richtung schneidet, in der der Schwingarm schwingt, zumindest ein Bereich, in dem eine maximale Spannung erzeugt wird, ein Nicht-Endabschnitt des plattenförmigen Elementes ist. Der Schwingarm weist einen Hauptabschnitt, der im Wesentlichen horizontal angeordnet ist, und Seitenabschnitte auf, die von Querrichtung-Endabschnitten des Hauptabschnittes nach unten gebogen sind. Die Endabschnitte des plattenförmigen Elementes sind von den unteren Endabschnitten der Seitenabschnitte zu einer Innenseite des Querschnittes hin gebogen.

Die US 5,992,867 offenbart eine Aufhängung. Die Aufhängung umfaßt einen Lenkerkörper mit einem ersten und einem zweiten Ende und einem Abschnitt, der die beiden Enden miteinander verbindet. Ein Bereich des Abschnitts ist mit einem offenen Querschnitt ausgestaltet, welcher in eine Richtung offen ist. Der offene Querschnitt weist eine erste Wand mit einem flachen Abschnitt auf, der an Endbereichen endet. Der offene Querschnitt weist Seitenwände auf, die sich in einer Richtung von den jeweiligen Endabschnitten der ersten Wand erstrecken und die an Endbereichen enden, wobei zweite Wände sich von jeweiligen Endbereichen jeder Seitenwand einwärts erstrecken. Die zweiten Wände erstrecken sich zueinander. Die Aufhängung weist ferner einen Verbindungspunkt für ein Rad am ersten Ende des Lenkerkörpers, und einen Verbindungspunkt zum Fahrzeug am zweiten Ende des Lenkerkörpers, sowie einen Verbindungspunkt zum Fahrzeug auf, der mit dem Abschnitt des Lenkerkörpers verbunden ist. Die Verbindungspunkte definieren eine Lasteinwirkungsebene, durch die eine Last auf die Aufhängung einwirkt. Die Lasteinwirkungsebene geht durch die erste Wand des Lenkerkörpers oder existiert in einer zur Richtung von der ersten Wand des Lenkerkörpers entgegengesetzten Richtung.

Die DE 100 07 193 A1 offenbart einen Querlenker für ein Kraftfahrzeug, der als hohle Edelstahl-Konfiguration gestaltet und zwischen den Enden mindest partiell ausgeschäumt ist.

In der DE 101 40 288 C1 wird ein Querlenker in Doppelschalen-Blechausbildung für die Vorderradanbindung bei einem Kraftfahrzeug mit zwei etwa in Fahrtrichtung hintereinander liegenden Anlenkpunkten an das Chassis offenbart. Die Anlenkpunkte bilden eine horizontale Kippachse für den Querlenker, wobei dieser einen Anbindungspunkt für die Radaufhängung aufweist. Wenigstens einer der Anlenkpunkte ist als ein in ein Lager eingreifender Sechskant ausgebildet. Der Sechskant ist aus Sechskanthälften, die Teil der Schalen des Querlenkers sind, gebildet.

Die DE 100 11 845 A1 betrifft einen Lenker in Schalenbauweise für eine Radaufhängung, insbesondere Querlenker. Der Lenker umfaßt ein erstes Schalenteil und ein zweites Schalenteil, die mit ihren Außenrändern zu einem Hohlkörper zusammengefügt sind. Zwischen zwei einander gegenüberliegenden Außenrandabschnitten des ersten und zweiten Schalenteils ist ein drittes Schalenteil eingefügt.

Der Ausgestaltung von vorderen, unteren L- oder A-förmigen Querlenkern liegen hauptsächlich Steifigkeitserfordernisse und eine Widerstandsfähigkeit gegen hohe Längskräfte während des Bremsens (Ausknicken) zugrunde. Heutzutage werden die vorderen Querlenker aus gegossenem oder geschmiedetem Aluminium (kostenintensiv), Gußeisen (schwer) oder gestanzten Metallblechen in einer Einschalenausgestaltung oder in einer Zweischalenausgestaltung hergestellt. Um eine höhere Steifigkeit und eine höhere Widerstandsfähigkeit zu erreichen, werden bei der Zweischalenausbildung zwei gestanzte Bleche derart miteinander verschweißt, daß diese einen hohlen Querschnitt aufweisen.

Für Kleinkraftwagen sind auch einschalige Lösungen bekannt, wobei die Baugruppe insbesondere bei L-förmigen Querlenkern straff ausgeführt wird. Um die Widerstandsfähigkeit gegen ein Ausknicken aufrecht zu erhalten, wird dabei entweder die Materialdicke des verwendeten Metallblechs erhöht oder es werden zusätzliche Verstärkungselemente vorgesehen, was aber bei beiden Lösungen zu einem höheren Gewicht führt. Durch das höhere Gewicht des Querlenkers erhöht sich selbstverständlich auch die Gesamtmasse des Kraftfahrzeuges, wodurch der Kraftstoffverbrauch und damit Schadstoffemissionen steigen. Zudem steigen die Herstellungskosten durch zusätzlichen Materialeinsatz oder durch die umständliche Montage der Verstärkungselemente.

Bekannt ist aber auch, daß der Querlenker in einer einschaligen Bauweise mit einem einstückigen Schalenkörper hergestellt wird, wobei sich an die jeweiligen U-Schenkel des Schalenkörpers einstückig z. B. nach innen zu einer Mittellängsebene aufeinander zu orientierte Flansche anschließen.

Eine derartige Herstellung ist aber äußerst kompliziert, da sowohl eine Radseite als auch eine Innen- bzw. Vorderseite des Querlenkers doppelt gebogen ausgestaltet ist. Durch diese komplizierte doppelte Biegung entstehen aber erhebliche Werkzeugkosten, wobei eine Vielzahl von Herstellungsschritten bzw. Biegeprozessen durchgeführt werden muß.

Der Erfindung liegt daher die Aufgabe zugrunde, einen Querlenker der eingangs genannten Art mit einfachen Mitteln dahin gehend zu verbessern, daß dieser ein geringeres Gewicht aufweist, wobei der Querlenker gleichzeitig kostengünstiger in weniger Herstellungsschritten herstellbar sein soll.

Erfindungsgemäß wird die Aufgabe dadurch gelöst, daß der U-Schenkel an einer Radseite einen in Richtung zu einer jeweils gegenüberliegenden Vorder- bzw. Innenseite orientierten Flansch aufweist, und daß der U-Schenkel an der Vorder- bzw. Innenseite eine freie Stirnkante aufweist, so daß der Querlenker an der Radseite im Querschnitt gesehen doppelt gebogen und an der Vorder- bzw. Innenseite im Querschnitt gesehen einfach gebogen ausgestaltet ist.

Dadurch, daß der Querlenker lediglich an seiner Radseite im Querschnitt gesehen doppelt gebogen ist, wird erreicht, daß die Werkzeugkosten reduziert werden, wobei gleichzeitig weniger Herstellungsschritte zur Herstellung des erfindungsgemäßen Querlenkers benötigt werden. Dadurch, daß an der Vorder- bzw. Innenseite des Querlenkers kein Flansch vorgesehen ist, wird gleichzeitig eine erforderliche Materialmenge und damit das Gewicht des Querlenkers reduziert.

Damit wird ein Querlenker zur Verfügung gestellt, der ohne Verluste der Steifigkeitserfordernisse und der Widerstandsfähigkeit kostengünstig hergestellt werden kann. Der erfindungsgemäßen Ausgestaltung des Querlenkers liegt die Erkenntnis zugrunde, daß die vordere bzw. Innenseite des Querlenkers nicht sehr viel zu den Steifigkeitserfordernissen und zu der Widerstandsfähigkeit gegen hohe Längskräfte während des Bremsens (Ausknicken) beiträgt.

Günstig im Sinne der Erfindung ist, wenn der radseitige U-Schenkel, bezogen auf den Basissteg, senkrecht von diesem weg gerichtet und parallel zum gegenüberliegenden vorder- bzw. innenseitigen U-Schenkel ausgerichtet ist. Möglich ist aber auch, daß die jeweiligen U-Schenkel, bezogen auf den Basissteg, in einem spitzen Winkel (ein Winkel α, der kleiner als ein rechter Winkel ist 0° < α < 90° ) und/oder in einem stumpfen Winkel (ein Winkel α, der größer als ein rechter Winkel ist α > 90°) von dem Basissteg abgebogen sind.

Zweckmäßig im Sinne der Erfindung ist, wenn der Flansch, bezogen auf den radseitigen U-Schenkel, senkrecht von diesem abgebogen ist. Selbstverständlich kann der Flansch auch in jedem anderen Winkel von dem radseitigen U-Schenkel abgebogen sein, wobei der Flansch vorzugsweise jeweils zu den gegenüberliegenden innen- bzw. vorderseitigen U-Schenkeln orientiert sein sollte. Natürlich kann der Flansch auch entgegengesetzt, also von den vorder- bzw. innenseitigen U-Schenkeln weg gerichtet sein.

Zur Erhöhung der Steifigkeit des Querlenkers ist vorteilhaft vorgesehen, daß der Basissteg eine Einbuchtung aufweist, die sich in etwa von dem hinteren Anbindungspunkt bis kurz vor das freie Ende erstreckt, wobei die Einbuchtung in einem Übergang von dem Anbindungsschenkel zum Radschenkel eine Ausnehmung aufweist, und wobei die Einbuchtung zumindest eine Bohrung in dem Anbindungsschenkel und/oder in dem Radschenkel aufweist.

Der Querlenker wird bevorzugt aus einem einzigen Metallblechrohling geformt, wobei dessen Dicke von den Steifigkeitserfordernissen und der Widerstandsfähigkeit (Ausknicken) abhängig ist. Das Profil des Querlenkers kann in unterschiedlichen Schritten hergestellt werden, um die Steifigkeit zu erhöhen und um funktionelle Einheiten in den Querlenker zu integrieren. An dem vorderen Anbindungspunkt kann eine vertikale Lagerbuchse direkt mit dem Querlenker verbunden werden, wobei selbstverständlich auch möglich ist, eine horizontale Lagerbuchse zu verwenden, wenn ein zusätzliches Rohr mit dem Querlenker verbunden ist. Dieses Rohr ist bevorzugt stoffschlüssig mit dem vorderen Anbindungspunkt verbunden, beispielsweise verschweißt. Eine senkrechte hintere Lagerbuchse kann ebenfalls direkt mit dem Querlenker verbunden werden, wobei selbstverständlich auch möglich ist, daß eine horizontale Lagerbuchse verwendet werden kann, wenn ei n zusätzlicher Bolzen stoffschlüssig mit dem Querlenker verbunden wird. Sogar ein Kugellager kann in dem Querlenker integriert sein, wobei natürlich auch möglich ist, daß das Kugellager mittels Bolzen oder Nieten an dem Querlenker befestigt sein kann.

Weitere vorteilhafte Ausgestaltungen der Erfindung sind in den Unteransprüchen und der folgenden Figurenbeschreibung offenbart. Es zeigt die einzige Figur:

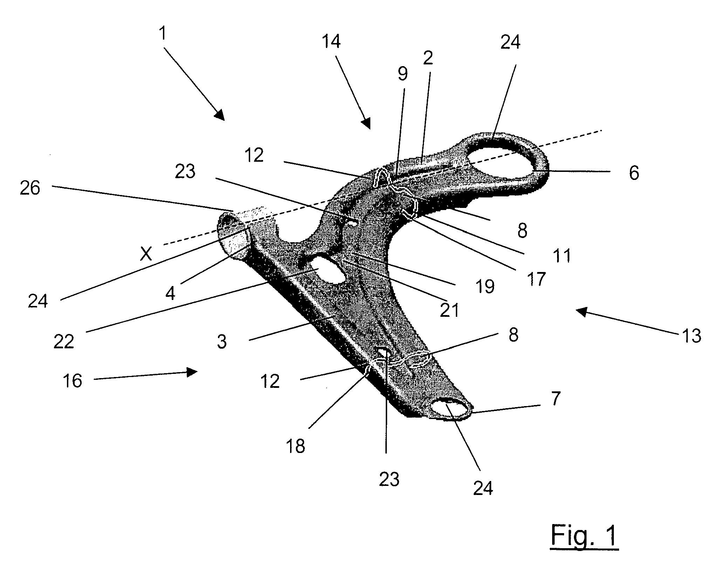

- Fig. 1: Einen Querlenker in einer perspektivischen Gesamtansicht.

Figur 1 zeigt einen vorderen, unteren Querlenker 1 in Einschalenausbildung für ein Kraftfahrzeug. Der Querlenker 1 weist einen Anbindungsschenkel 2 und einen Radschenkel 3 auf. In dem dargestellten Ausführungsbeispiel ist der Querlenker 1 L-förmig ausgeführt und weist einen einstückigen Schalenkörper auf.

Der Anbindungsschenkel 2 weist einen in Längsrichtung X des Kraftfahrzeugs gesehen vorderen Anbindungspunkt 4 und einen dazu beabstandeten hinteren Anbindungspunkt 6 auf. Mit dem Anbindungsschenkel 2 ist der Querlenker 1 über die Anbindungspunkte 4 bzw. 6 mit einer Kraftfahrzeugkarosserie bzw. einem Hilfsrahmen verbindbar. Der Anbindungsschenkel 2 ist im eingebauten Zustand im Wesentlichen längs der Längsrichtung orientiert, wobei sich der Radschenkel 3 von dem vorderen Anbindungspunkt 4 zu einem freien Ende 7 erstreckt, an dem ein Rad anbindbar ist. Der Radschenkel 3 ist im Wesentlichen quer zur Längsrichtung orientiert.

In Figur 1 ist sowohl in dem Anbindungsschenkel 2 als auch in dem Radschenkel 3 jeweils ein Querschnitt 8 des Querlenkers 1 eingezeichnet. Der Querlenker 1 ist im Querschnitt gesehen U-förmig mit einem Basissteg 9 und zwei U-Schenkeln 11, 12 ausgestaltet und in Einbaulage einseitig geöffnet. In dem dargestellten Ausführungsbeispiel ist die geöffnete Seite zu einem Boden orientiert.

Der Querlenker 1 weist in Einbaulage eine Radseite 13 und eine Innenseite 14 bzw. Vorderseite 16 auf. Die Radseite 13 ist in Form eines Bogenabschnittes ausgestaltet. Die Innenseite 14 ist ebenfalls in Form eines Bogenabschnittes ausgestaltet, wobei die Vorderseite 16 gerade ausgeführt ist. Als Radseite 13 wird im Sinne der Erfindung die Seite angesehen, welche in Einbaulage zum Rad weist. Als Innenseite 14 wird im Sinne der Erfindung die Seite angesehen, welche in Einbaulage zu einer Mittelachse des Kraftfahrzeugs weist, wobei als Vorderseite 16 die Seite angesehen wird, welche in Einbaulage zu einer Fahrzeugfront weist.

Dem Querschnitt 8 ist zu entnehmen, daß der U-Schenkel 11 an der Radseite 13 einen in Richtung zu der jeweils gegenüberliegenden Vorder- bzw. Innenseite 16 bzw. 14 orientierten Flansch 17 aufweist. Der U-Schenkel 12 an der Vorder- bzw. Innenseite 16 bzw. 14 weist dagegen eine freie Stirnkante 18 auf. Damit ist der Querlenker 1 an der Radseite 13 im Querschnitt gesehen doppelt gebogen und an der Vorder- bzw. Innenseite 16 bzw. 14 im Querschnitt gesehen einfach gebogen ausgestaltet.

Der radseitige U-Schenkel 11 ist, bezogen auf den Basissteg 9, in dem dargestellten Ausführungsbeispiel senkrecht von diesem weg gerichtet und parallel zu dem gegenüberliegenden vorder- bzw. innenseitigen U-Schenkel 12 ausgerichtet. Der Querschnitt 8 des Radschenkels 3 ist identisch zu dem Querschnitt 8 des Anbindungsschenkels 2 ausgestaltet, wobei die erkennbare Krümmung des U-Schenkels 11 auf eine perspektivische Verzerrung zurückzuführen ist. Natürlich kann die Radseite 13 beispielsweise wie in dem Querschnitt 8 des Radschenkels 3 erkennbar ausgestaltet sein. Selbstverständlich kann der jeweilige U-Schenkel 11 bzw. 12 aber auch in jeder sinnvollen Winkellage von dem Basissteg 9 abgebogen sein.

Der Flansch 17 ist, bezogen auf den radseitigen U-Schenkel 11, in dem dargestellten Ausführungsbeispiel im Querschnitt gesehen senkrecht von diesem in Richtung zur Vorder- bzw. Innenseite 16 bzw. 14 abgebogen. Natürlich können auch hier andere sinnvolle Winkelbeträge verwendet werden, wobei auch denkbar ist, daß der Flansch 17 derart von dem U-Schenkel 11 abgebogen ist, daß der Flansch 17 von der Vorder- bzw. Innenseite 16 bzw. 14 wegorientiert ist.

Der Querlenker 1 ist im Querschnitt 8 gesehen in Einbaulage nach unten hin geöffnet.

Der Basissteg 9 weist eine zur geöffneten Seite eingeprägte Einbuchtung 19 auf. Die Einbuchtung 19 erstreckt sich in etwa über den gesamten Basissteg 9 von dem hinteren Anbindungspunkt 6 bis kurz vor das freie Ende 7, wobei die Einbuchtung 19 in einem Übergang 21 von dem Anbindungsschenkel 2 zum Radschenkel 3 eine Ausnehmung 22 aufweist. Die Einbuchtung 19 weist zudem zumindest eine Bohrung 23 in dem Anbindungsschenkel 2 und in dem Radschenkel 3 auf.

Der Querlenker 1 weist an seinem hinteren Anbindungspunkt 6, seinem vorderen Anbindungspunkt 4 und an seinem freien Ende 7 Aufnahmen 24 auf, denen jeweils Befestigungselemente zugeordnet werden können, um den Querlenker 1 über seinen Anbindungsschenkel 2 mit der Fahrzeugkarosserie bzw. dem Hilfsrahmen und den Radschenkel 3 mit einem Rad zu verbinden.

In dem dargestellten Ausführungsbeispiel kann dem vorderen Anbindungspunkt 4 eine horizontale Lagerbuchse bzw. ein Gummilager und dem hinteren Anbindungspunkt 6 ein Kugelgelenk zugeordnet werden. Die horizontale Lagerbuchse ist von einem Rohr 26 aufnehmbar, das in dem dargestellten Ausführungsbeispiel bevorzugt stoffschlüssig mit dem vorderen Anbindungspunkt 4 verbunden, beispielsweise verschweißt ist. Möglich ist aber auch, dem hinteren Anbindungspunkt 6 einen Bolzen zuzuordnen. Der Bolzen kann in dem Querlenker 1 hinreichend lagesicher integriert werden. Dem freien Ende 7 kann ebenfalls ein Kugelgelenk zugeordnet werden.

## Patentansprüche

1. Querlenker, der einen Anbindungsschenkel (2) und einen Radschenkel (3) aufweist, wobei der Anbindungsschenkel (2) einen in Längsrichtung (X) eines Kraftfahrzeugs gesehen vorderen Anbindungspunkt (4) und einen dazu beabstandeten hinteren Anbindungspunkt (6) aufweist, die mit einer Kraftfahrzeugkarosserie bzw. einem Hilfsrahmen verbindbar sind, wobei der Anbindungsschenkel (2) im Wesentlichen längs der Längsrichtung (X) orientiert ist und wobei sich der Radschenkel (3) von dem vorderen Anbindungspunkt (4) zu einem freien Ende (7) erstreckt, an dem ein Rad anbindbar ist, und wobei der Radschenkel (3) im Wesentlichen quer zur Längsrichtung (X) orientiert ist, und wobei der Querlenker (1) im Querschnitt gesehen U-förmig mit einem Basissteg (9) und zwei U-Schenkeln (11, 12) ausgestaltet und in Einbaulage einseitig geöffnet ist,
**dadurch gekennzeichnet, daß**
der U-Schenkel (11) an einer Radseite (13) einen in Richtung zu einer jeweils gegenüberliegenden Vorder- bzw. Innenseite (16, 14) orientierten Flansch (17) aufweist und daß der U-Schenkel (12) an der Vorder- bzw. Innenseite (16, 14) eine freie Stirnkante (18) aufweist, so daß der Querlenker (1) an der Radseite (13) im Querschnitt gesehen doppelt gebogen und an der Vorder- bzw. Innenseite (16, 14) im Querschnitt gesehen einfach gebogen ausgestaltet ist.

2. Querlenker nach Anspruch 1,
**dadurch gekennzeichnet, daß**
der radseitige U-Schenkel (11), bezogen auf den Basissteg (9), senkrecht von diesem weg gerichtet und parallel zum gegenüberliegenden vorder- bzw . innenseitigen U-Schenkel (12) ausgerichtet ist.

3. Querlenker nach Anspruch 1 oder 2,
**dadurch gekennzeichnet, daß**
der Flansch (17), bezogen auf den radseitigen U-Schenkel (11), senkrecht von diesem in Richtung zur Vorder- bzw. Innenseite (16,14) abgebogen ist.

4. Querlenker nach einem der vorhergehenden Ansprüche,
**dadurch gekennzeichnet, daß**
der Basissteg (9) eine Einbuchtung (19) aufweist.

5. Querlenker nach Anspruch 4,
**dadurch gekennzeichnet, daß**
sich die Einbuchtung (19) in etwa über den gesamten Basissteg (9) von dem hinteren Anbindungspunkt (6) bis kurz vor das freie Ende (7) erstreckt, wobei die Einbuchtung (19) in einem Übergang (21) von dem Anbindungsschenkel (2) zum Radschenkel (3) eine Ausnehmung (22) aufweiset, und wobei die Einbuchtung (19) zumindest eine Bohrung (23) in dem Anbindungsschenkel (2) und/oder in dem Radschenkel (3) aufweist.

## Claims

1. Lateral arm which has a connecting limb (2) and a wheel limb (3), wherein the connecting limb (2) has a front connecting point (4), as seen in the longitudinal direction (X) of a motor vehicle, and a rear connecting point (6) spaced apart from the front connecting point, which connecting points can be connected to a motor vehicle body or to an auxiliary frame, wherein the connecting limb (2) is oriented substantially along the longitudinal direction (X), and wherein the wheel limb (3) extends from the front connecting point (4) to a free end (7), to which a wheel can be connected, and wherein the wheel limb (3) is oriented substantially transversely with respect to the longitudinal direction (X), and wherein the lateral arm (1) is of U-shaped configuration, as seen in cross section, with a base limb (9) and two U limbs (11, 12) and is open on one side in the fitted position, **characterized in that** the U limb (11) has, on a wheel side (13), a flange (17) which is oriented in the direction of a respectively opposite front or inner side (16, 14), and **in that** the U limb (12) has a free end edge (18) on the front or inner side (16, 14) such that the lateral arm (1) is configured such that it is bent twice, seen in cross section, on the wheel side (13) and such that it is bent once, as seen in cross section, on the front or inner side (16, 14).

2. Lateral arm according to Claim 1,
**characterized in that** the wheel-side U limb (11), with reference to the base web (9), is directed away perpendicularly from the latter and is oriented parallel to the opposite front or inner U limb (12).

3. Lateral arm according to Claim 1 or 2, **characterized in that** the flange (17), with reference to the wheel-side U limb (11), is bent perpendicularly away from the latter in the direction of the front or inner side (16, 14).

4. Lateral arm according to one of the preceding claims, **characterized in that** the base web (9) has an indentation (19).

5. Lateral arm according to Claim 4, **characterized in that** the indentation (19) extends approximately over the entire base web (9) from the rear connecting point (6) to shortly before the free end (7), the indentation (19) having a recess (22) in a transition (21) from the connecting limb (2) to the wheel limb (3), and the indentation (19) having at least one bore (23) in the connecting limb (2) and/or in the wheel limb (3).

## Revendications

1. Bras latéral, qui présente une branche de liaison (2) et une branche de roue (3), la branche de liaison (2) présentant un point de liaison avant (4), vu dans la direction longitudinale (X) d'un véhicule automobile, et un point de liaison arrière (6) espacé de celui-ci, lesquels peuvent être raccordés à une carrosserie de véhicule automobile ou à un châssis auxiliaire, la branche de liaison (2) étant orientée sensiblement suivant la direction longitudinale (X) et la branche de roue (3) s'étendant depuis le point de liaison avant (4) jusqu'à une extrémité libre (7) à laquelle une roue peut être raccordée, et la branche de roue (3) étant orientée sensiblement transversalement à la direction longitudinale (X), et le bras latéral (1), vu en section transversale, étant configuré en forme de U avec une partie de base (9) et deux branches de U (11, 12), et étant ouvert d'un côté dans la position d'installation,
**caractérisé en ce que**
la branche de U (11) présente, au niveau d'un côté de roue (13), une bride (17) orientée dans la direction d'un côté avant ou intérieur (16, 14) opposé respectif, et **en ce que** la branche de U (12) présente, sur le côté avant ou intérieur (16, 14), une arête frontale libre (18), de sorte que le bras latéral (1) soit doublement cintré au niveau du côté de la roue (13), vu en section transversale, et soit cintré une fois au niveau du côté avant ou intérieur (16, 14), vu en section transversale.

2. Bras latéral selon la revendication 1,
**caractérisé en ce que**
la branche de U (11) du côté de la roue, par rapport à la partie de base (9), est orientée perpendiculairement à l'écart de celle-ci, et parallèlement à la branche de U(12) du côté avant ou intérieur opposée

3. Bras latéral selon la revendication 1 ou 2,
**caractérisé en ce que**
la bride (17), par rapport à la branche de U (11) du côté de la roue, est recourbée perpendiculairement à celle-ci dans la direction du côté avant ou intérieur (16, 14).

4. Bras latéral selon l'une quelconque des revendications précédentes,
**caractérisé en ce que**
la partie de base (9) présente un renfoncement (19).

5. Bras latéral selon la revendication 4,
**caractérisé en ce que**
le renfoncement (19) s'étend approximativement sur toute la partie de base (9) depuis le point de liaison arrière (6) pratiquement jusqu'à l'extrémité libre (7), le renfoncement (19) présentant, dans une transition (21) de la branche de liaison (2) à la branche de roue (3), un évidement (22) et le renfoncement (19) présentant au moins un alésage (23) dans la branche de liaison (2) et/ou dans la branche de roue (3).
